# EUROPÄISCHE PATENTSCHRIFT

(11) **EP 1 691 656 B1**
(45) Veröffentlichungstag und Bekanntmachung des Hinweises auf die Patenterteilung: **26.09.2012**
(21) Anmeldenummer: 04821629.5
(22) Anmeldetag: 10.12.2004
(51) Int. Cl.: A47L 9/00, A47L 9/28, G05D 1/02

(54) **SELBSTTÄTIG VERFAHRBARES BODENSTAUB-AUFSAMMELGERÄT**
AUTOMATICALLY DISPLACEABLE FLOOR DUST COLLECTING DEVICE
ASPIRATEUR-TRAINEAU A DEPLACEMENT AUTOMATIQUE

(30) Priorität: 10.12.2003 DE 10357636
(43) Veröffentlichungstag der Anmeldung: 23.08.2006
(73) Patentinhaber: Vorwerk & Co. Interholding GmbH, 42275 Wuppertal (DE)
(72) Erfinder: SCHLISCHKA, Patrick, 42369 Wuppertal (DE); KECK, Ulrich, 71332 Waiblingen (DE); BIELZER, Raffael, 51399 Burscheid (DE); POPPEN, Günter, 42477 Radevormwald (DE); SOMMER, Jörg, 50737 Köln (DE); LANG, Torsten, 42657 Solingen (DE)
(74) Vertreter: Müller, Enno
(86) Internationale Anmeldenummer: PCT/EP2004/053390
(87) Internationale Veröffentlichungsnummer: WO 2005/087071

(56) Entgegenhaltungen:
- EP-A- 0 382 693
- DE-A1- 10 242 257
- US-A- 5 621 291
- US-A- 5 712 961
- US-A1- 2003 025 472
- US-B1- 6 389 329

## Beschreibung

Die Erfindung betrifft zunächst ein selbsttätig verfahrbares Bodenstaub-Aufsammelgerät mit einem elektromotorischen Antrieb, einem Staubsammelbehälter und einer Abdeckung, wobei das Bodenstaub-Aufsammelgerät mit einer Hinderniserkennung versehen ist, wobei eine Mehrzahl von in einer Vorstandslage angeordneten Tastenelementen vorgesehen sind.

Ein Bodenstaub-Aufsammelgerät der in Rede stehenden Art ist aus der DE 102 42 257 A1 bekannt. Die hieraus bekannte Arbeitsweise und Verhaltensstrategie ist wesentlicher Bestandteil der Beschreibung.

Beim Befahren eines Raumes muss ein selbsttätig verfahrbares Bodenstaub-Aufsammelgerät Gegenstände und Raumbegrenzungen erkennen und durch angemessene Rangier- und Ausweichbewegungen reagieren. Die Hinderniserkennung kann berührungslos mit Hilfe von optischen oder akustischen Abstandssensoren oder taktil erfolgen. Bekannte Geräte arbeiten mit einer Stoßerkennung oder zumindest mit einer Kombination aus Abstandserkennung beispielsweise mittels Ultraschall und Stoßerkennung als Absicherung bei Versagen der Abstandserkennung. Bei der taktilen Hinderniserkennung tritt der Roboter mit dem Hindernis in Kontakt. Bei einer von den jeweiligen Baugruppen und ihrer Anordnung abhängigen Kontaktkraft bzw. einem Stoßimpuls löst ein Sensor aus. Dieses Signal wird von einem Microprozessor verarbeitet, der wiederum das Stoppen der Antriebsräder veranlasst. Während dieses Zeitraums und bedingt durch die Systemträgheit bewegt sich das Gerät weiter auf das Hindernis zu und übt dabei eine Kraft aus, welche im ungünstigsten Fall zu einer Beschädigung oder zumindest zu einem Verschieben des Hindernisses führt. Zudem können Störgrößen und Ereignisse zu einer Falschaussage bei der Hinderniserkennung führen. So können beispielsweise Unebenheiten wie Übergänge von Teppichen zu Hartböden und umgekehrt oder auch Unebenheiten durch reliefartige Strukturen des Bodenbelags und auch Erschütterungen durch Fahrbewegungen beim Beschleunigen, Drehen oder in Kurvenfahrten zu Fehlmessungen führen. Die bekannte sensible Sensorik ist anfällig gegenüber Störgrößen wie Erschütterungen durch Fahrbewegungen. Dieser Problematik kann durch Abfederung mit starken Federn begegnet werden, wodurch auch eine erschwerte Bewegung, beispielsweise einer Haube des Roboters bis zum Auslösen des Sensors erreicht ist. Eine solche Hinderniserkennung ist letztlich störunanfällig jedoch auch unempfindlich, so dass diese Lösungen sich nicht als ausreichend sensitiv erweisen, was bei einer Kollision Schäden an Gegenständen und Mobiliar zur Folge haben kann.

Bei einem aus der US2003/025472 A1 bekannten Bodenstaub-Aufsammelgerät sind die Sensoren innerhalb der Kontur diese Gerätes angeordnet. Die gewünschte wirksame Vermeidung von Zusammenstößen lässt sich hierdurch noch nicht erreichen.

Ausgehend vom genannten Stand der Technik beschäftigt sich die Erfindung mit der Aufgabe, eine vorteilhafte Anordnung von Tastenelementen bei einem Bodenstaub-Aufsammelgerät anzugeben.

Diese Aufgabe ist beim Gegenstand des Anspruches eingelöst, wobei darauf abgestellt ist, dass ein Stoßring durch federnd gelagerter Taster mit kleiner Masse gebildet ist, die gegenüber einer Umfangskontur des Bodenstaub-Aufsammelgerätes in einer Vorstandslage sind.

Zufolge dieser Ausgestaltung sind Tasterelemente vorgesehen, welche jeweils eine geringe Masse aufweisen. Das lokale Auslösen erfordert geringere Kräfte, wobei durch die Anordnung einer Mehrzahl von in einer Vorstandslage angeordneten Tasterelementen eine Ortsinformation über das erkannte Hindernis geliefert werden kann. Gleichzeitig wirken bei Geschwindigkeitsänderungen nur geringe Trägheitskräfte. Diese wirken somit nicht als Störgröße. Die Tasterelemente sind gegenüber der Umfangskontur in einer Vorstandslage Bevorzugt weist hierbei das Aufsammelgerät eine kreisrunde Grundrisskontur auf. Bevorzugt decken die Tasterelemente einen mehr als 25 % des Umfangs entsprechenden Bereich ab. Weiter bevorzugt sind die Tasterelemente über den gesamten Umfang des Aufsammelgeräts angeordnet, so dass die in einer Vorstandslage angeordneten Tasterelemente zusammen in Art eines Stoßrings wirken. Diesbezüglich kann weiter vorgesehen sein, dass ein Tasterelement als Startteil ausgebildet ist, das an seinem dem Grundriss des Bodenstaub-Aufsammelgeräts zugeordneten Fuß federnd gelagert ist. Auch kann über ein solches Tasterelement bei Hinderniskontaktierung ein Reibelement verschoben werden. Die Reibkraft, die in der Regel geringer ist als die direkte stoßbedingt auftretende Kraft, verschiebt über das Tasterelement dieses Reibelement, wobei eine Rückstellkraft das Reibelement in die Ausgangslage wieder zurückbewegt, so beispielsweise durch eine beim Stoß gespannte Feder.

Ein Tasterelement kann zur Überprüfung eines Bereiches aktiv bewegbar sein Zufolge dieser Ausgestaltung ist ein aktiver Fühler bevorzugt in Fahrtrichtung vor dem Aufsammelgerät vorgesehen, welcher die Umgebung aktiv abtastet und Objekte erkennt bevor das Aufsammelgerät dagegen fahrt. So kann das Tasterelement relativ zu einer Vertikalachse des Bodenstaub-Aufsammelgeräts bewegbar sein. So wird weiter vorgeschlagen, dass das Tasterelement in Bezug auf eine Horizontalebene des Bodenstaub-Aufsammelgeräts bewegbar ist, womit eine Abtastung in Art eines Blindenstocks erreicht ist. Auch besteht die Möglichkeit, dass das Tasterelement in Bezug auf eine Vertikalebene des Bodenstaub-Aufsammelgeräts bewegbar ist, womit zugleich auch einem Unterfahren von Gegenständen entgegengewirkt ist. Weiter alternativ kann das Tasterelement auch eine Kreisbewegung vollziehen. Alternativ besteht die Möglichkeit, dass das Tasterelement um eine Vertikalachse außerhalb des Gerätegrundrisses bewegbar ist. Um diesbezüglich die Hinderniserkennung weiter zu verbessern, ist vorgesehen, dass mehrere über den Umfang verteilte Tasterelemente vorgesehen sind, wobei die Tasterelemente einen mehr als 25 % des Umfangs entsprechenden Bereich des Geräts abdecken. In einer bevorzugten Ausgestaltung arbeitet das Tasterelement zugleich als rotierende Bürste, dies jedoch ohne Bodenkontakt. Auch besteht die Möglichkeit, dass das Tasterelement Teil eines an dem Gerätegrundriss angepassten, umlaufenden Tasterbandes ist. Ein solches Tasterband kann einzelne, beispielsweise nadelartige Tasterelemente tragen. Denkbar ist jedoch auch die Anordnung mehrerer zugleich als Bürste arbeitender Tasterelemente an dem Tasterband, welche Bürsten über den Umfang verteilt und um eine Vertikalachse außerhalb des Gerätegrundrisses bewegbar sind. Auch kann das Tasterband als Bürstenband ausgebildet sein, so als umlaufender Borstenstreifen. Die Auswertung des Tasterelements erfolgt über eine Überwachung des zur Bewegung des Tasterelements erforderlichen Antriebsstroms. Denkbar ist auch, eine Auswertung über ein Dehnungsmessprinzip zu schaffen. Eine weitere Möglichkeit der Auswertung besteht beispielsweise darin, die Kontaktierung zweier oder mehrerer nebeneinander angeordneter leitfähiger Borsten bei Berührung des Hindernisses zu überwachen. Auch kann ein mechanisch schwingendes System vorgesehen sein, wobei die schwingende Länge durch den Stoß und die damit verbundene Deformation verändert wird, was zu einer Verstimmung des Systems führt,

Ein in einer Vorstandslage angeordnetes. Tasterelement kann deformierbar sein vorgesehen sein Tasterelement kann über den gesamten Umfang angeordnet ein und eine Deformierung über eine Änderung des elektrischen Widerstands erfassbar sein So können beispielsweise über den gesamten Umfang zwei dünne Drähte oder zwei dünne Folien angeordnet sein, zwischen welchen sich ein Dielektrikum befindet. Bei einem Stoß wird der Abstand zwischen den Drähten bzw. den Folien und somit die Kapazität verringert. Auch kann die Umsetzung einer elastischen Verformung in eine elektrische Kenngröße wie Widerstand und Induktivität zur Hinderniserkennung herangezogen werden. Beispielsweise wird bei einem Stoß ein bevorzugt elektrisch leitfähiger Schaumstoff komprimiert, der bedingt durch die Deformation den elektrischen Widerstand ändert. Auch ist die Umsetzung einer elastischen Längenänderung in eine elektrische Kenngröße wie Widerstand und Induktivität zur Hinderniserkennung heranziehbar. Ein Stoß wird hierbei in eine radiale elastische Längenänderung umgesetzt, wobei sich die Größe des elektrischen Widerstands des gelängten Bauteils verändert und die Widerstandsänderung erkannt wird. Alternativ kann über einen Mechanismus ein Kern aus einer Spule gezogen werden, wodurch sich die Induktivität ändert. Auch besteht die Möglichkeit, eine Hinderniserkennung über die Veränderung des elektrischen Potentials zu schaffen, wobei beispielsweise ein Stoßelement auf eine Leiterbahn drückend einwirkt. So kann weiter ein Widerstandsdraht gegen eine Leiterbahn gedrückt werden, womit zudem eine Ortsauflösung zur Positionsbestimmung des Hindernisses erreicht ist.

Ein Tasterelement kann Teil der als Haube ausgebildeten Abdeckung sein oder durch die Abdekkung selbst gebildet sein O, das Tasterelement kann sich über den gesamten Umfang der Abdeckung erstrecken. So können zwei Magnete vorgesehen sein, von welchen einer als Lager zum Beispiel in Form eines Ringmagneten und ein Magnet beweglich ausgebildet ist, wobei bevorzugt der Lagermagnet am Chassis und der bewegliche Magnet an der Haube befestigt ist. Bei einem Stoß wird das System aus der Ruhelage bewegt. Die Änderung des Magnetfeldes wird wiederum detektiert. Das Rückstellen in die Grundstellung erfolgt selbsttätig durch Ausrichten im Magnetfeld oder auch unterstützt durch Federkraft.

Tasterelement kann als ein in der Vorstandslage angeordneter, luftgefüllter Schlauch ausgebildet sein und eine durch Berührung hervorgerufene Luftdruckänderung durch einen Druckmesser erfassbar sein. Bei Berührung mit einem Hindernis wird der luftgefüllte Schlauch durch die einwirkende Kraft deformiert. Die Detektion erfolgt bevorzugt durch einen Drucksensor. Um eine Ortsauflösung zu erreichen, sind bevorzugt mehrere, so beispielsweise zwei Drucksensoren in jedem Ende des aufgetrennten Schlauches angeordnet, wodurch eine Ortsauflösung durch einen Laufzeitvergleich vorgenommen werden kann.

Ein einer Vorstandslage angeordnetes Tasterelement kann als Lichtschranke ausgebildet sein. Bevorzugt kommt hierbei eine Infrarot-Lichtschranke zum Einsatz, welche zumindest im Frontbereich, das heißt in üblicher Verfahrrichtung im vorderen Bereich des Geräts angeordnet ist. Eine Unterbrechung des Lichtstrahls durch ein Objekt wird sicher und frühzeitig erkannt. Um über einen größeren Teil des Umfangs des Gerätes eine solche Hinderniserkennung zu schaffen, ist vorgesehen, dass die Lichtschranke nach Art eines Linienzugs durch Umlenkspiegel verlängert ist. So kann der Lichtstrahl über die Umlenkspiegel über den gesamten Umfang des Geräts gelenkt werden. Denkbar ist auch eine Anordnung mehrerer einzelner Lichtschranken, welche in einer Vorstandslage angeordnet sind. So können Umlenkspiegel und Sender eingesetzt werden, die mit empfindlichen taktilen Sensoren versehen sein können. Ein wesentlicher Vorteil dieser Lösung besteht darin, dass zur Hinderniserkennung im Bereich der Lichtschranke keine Masse bewegt werden muss. Diese Hinderniserkennung erfolgt in den Segmenten d. h. im Bereich der Lichtschranke, außerhalb der Umlenkspiegel und Sender, ohne Stoß.

Ein in einer Vorstandslage angeordnetes Tasterelement kann aus beabstandeten, einander zugewandten Reflektoren bestehen, die bevorzugt den Gerätegrundriss umlaufend ausgebildet sind und eine durch Deformation eines Reflektors geänderte Lichtleitung ausgewerte werden. So wird zwischen zwei Parallelwänden ein gesendetes Licht vollständig reflektiert. Durch Deformation beim Stoß werden die Reflektionseigenschaften verändert. Diesbezüglich kann alternativ auch ein Lichtleiter vorgesehen sein, der bei Deformation die Leitung unterbricht.

Es kännen eine Mehrzahl kapazitiv und/ oder induktiv arbeitender Abstandssensoren über den Umfang des Gerätegrundrisses verteilt angeordnet sein. Ein kapazitiv oder induktiv arbeitender Abstandssensor reagiert bereits auf das Annähern an ein Hindernis ähnlich einer Fänparkhilfe bei Kraftfahrzeugen. Hindernisse werden hierbei ohne Stoß erkannt, wenn, wie bevorzugt, der Sensor umlaufend an der Haube des Gerätes angebracht ist.

Nachstehend ist die Erfindung anhand der beigefügten Zeichnungen, welche lediglich mehrere Ausführungsbeispiele darstellen, näher erläutert. Es zeigt:

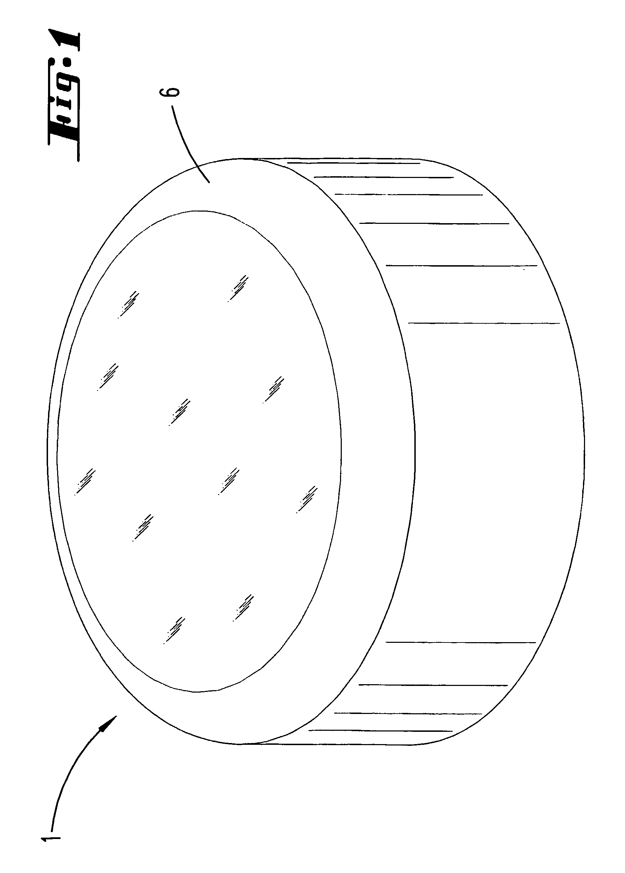

- Fig. 1: ein Bodenstaub-Aufsammelgerät in perspektivischer Darstellung;

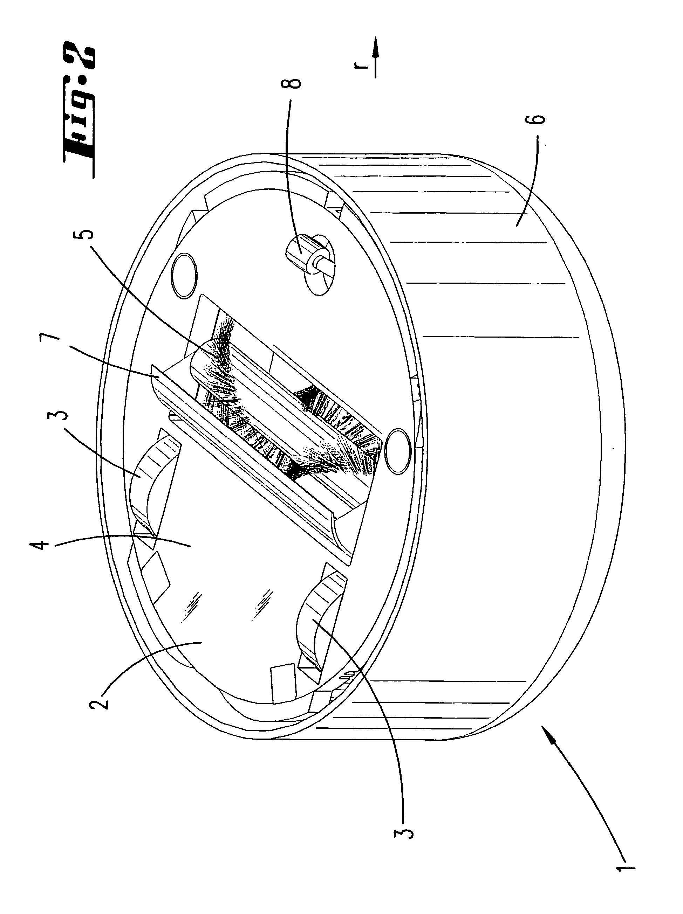

- Fig. 2: eine perspektivische Unteransicht des erfindungsgemäßen Bodenstaub-Aufsammelgeräts;
- Fig. 3 bis 11: schematische Darstellungen verschiedener Ausführungsformen einer erfindungsgemäßen Hinderniserkennung für das Aufsammelgerät.

Dargestellt und beschrieben ist ein Bodenstaub-Aufsammelgerät 1 in Form eines Reinigungsroboters mit einem Chassis 2, welches unterseitig, dem zu pflegenden Boden zugewandt, elektromotorisch angetriebene Verfahrräder 3 sowie eine über die Unterkante des Chassisbodens 4 hinausragende, gleichfalls elektromotorisch angetriebene Bürste 5 trägt. Das Chassis 2 ist überfangen von einer Gerätehaube 6, wobei das Bodenreinigungsgerät 1 einen kreisförmigen Grundriss aufweist. Das Gerät 1 kann jedoch auch einen von einer Kreisform abweichenden Grundriss aufweisen, wobei sich dieser weiter bspw. aus einem halbkreisförmigen Kreisformabschnitt und einem hieran anschließenden, an einem Rechteck orientierten Formabschnitt zusammensetzen kann.

Die Verfahrräder 3 sind in üblicher Verfahrrichtung r des Bodenstaub-Aufsammelgeräts 1 der Bürste 5 nachgeordnet, wobei weiter der Bürste nach geordnet eine kehrblechartige Schmutzrampe 7 vorgesehen ist, über welche der abgebürstete Schmutz in eine behälterartige Aufnahme abgeworfen wird.

In üblicher Verfahrrichtung r ist der Bürste 5 vorgeordnet ein Stützrad in Form eines Mitlaufrades 8 positioniert, zufolge dessen eine Dreipunktauflage des Bodenstaub-Aufsammelgerätes 1 auf dem zu pflegenden Boden erreicht ist.

Es besteht das Bedürfizis, bei derartigen Reinigungsrobotern, Hindernisse 9 zu erkennen. Hierzu ist erfindungsgemäß eine stoßsensitive Hinderniserkennung 10 vorgesehen, mittels welcher die Berührung des Hindernisses 9 erkannt wird, wobei zugleich das Bodenstaub-Aufsammelgerät 1 zum Stehen kommt, bevor das Hindernis 9 verschoben, umgeworfen oder beschädigt wird. Das Bodenstaub-Aufsammelgerät 1 wird mittels der nachstehend beschriebenen, verschiedenen Hinderniserkennungen 10 nicht durch Störgrößen, wie beispielsweise Erschütterungen, die durch das Überqueren von Bodenunebenheiten hervorgerufen werden, fehlgeleitet. Es ist eine hohe Stoßempfindlichkeit bei geringer Störanfälligkeit erreicht

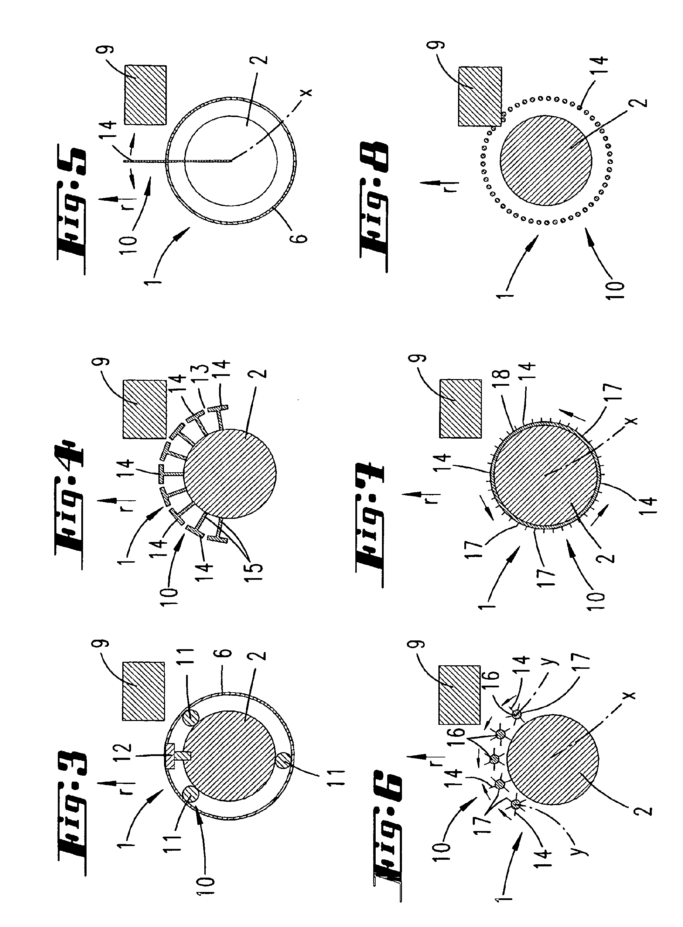

So zeigen die Figuren 3 bis 6 vier verschiedene Ausführungsbeispiele einer mechanischen Lösung der Hinderniserkennung 10. Bei der Ausführungsform gemäß der schematischen Darstellung in Fig. 3 ist die Haube 6 oder alternativ auch ein Haubensegment beweglich auf dem Chassis 2, insbesondere in einer horizontalen Ebene beweglich gelagert, wobei sich die Haube 6 in der Horizontalebene über Federelemente 11 bevorzugt in Form von Schaumstoffkörpern an dem Chassis 2 abstützt. Ein bevorzugt in Verfahrrichtung r stirnseitig angeordneter Sensor 12 dient der Erfassung einer Haubenbewegung bei Kontakt des Bodenstaub-Aufsammelgeräts 1 mit einem Hindernis 9. Dieser Sensor 12 kann als Taster bzw. Micro schalter ausgebildet sein, welcher bereits bei geringer Kontaktkraft auslöst, wobei durch die Wahl der Federelemente 11 bzw. durch die Wahl des Schaumstoffmaterials die Sensibilität und somit die Störempfindlichkeit dieser Hinderniserkennung 10 einstellbar ist.

Auch besteht die Möglichkeit einer Hinderniserkennung 10 durch eine Beschleunigungsmessung, bei welcher in dem Bodenstaub-Aufsammelgerät 1 ein Beschleunigungssensor, beispielsweise in Form eines Pendels oder einer Kugel, stoßbedingte Verzögerungen erkennt. Hierbei ist die Empfindlichkeit so eingestellt, dass keine Reaktionen bei üblicher Beschleunigung oder bei Vertikalstößen, verursacht durch Bodenunebenheiten, bspw. an Teppichkanten, erfolgen. Es werden lediglich Reaktionen in der horizontalen Ebene erfasst.

Eine weitere alternative Hinderniserkennung 10 ist in Fig. 4 schematisch dargestellt. Hierbei handelt es sich um eine lokale Stoßerkennung, wobei ein einzelner Stoßring 13 mit vergleichbar großer Masse, welcher Stoßring 13 auch Teil der Haube 6 sein kann, in mehrere kleine federnd gelagerte Taster 14 mit kleiner Masse aufgeteilt ist Diese Taster 14 sind gegenüber der Umfangskontur des Bodenstaub-Aufsammelgeräts 1 in einer Vorstandslage, wobei der durch die Taster 14 gebildete Stoßring 13 sich über einen Umfang von ca. 180° erstreckt. Die Tasterelemente 14 sind jeweils als Starrteil ausgebildet, welches an seinem dem Grundriss des Bodenstaub-Aufsammelgeräts 1 zugeordneten Fuß 15 federnd an dem Chassis 2 bzw. an der Haube 6 gelagert ist. Bei Hinderniskontakt wird der Stoßring 13 nur lokal beaufschlagt Demzufolge werden nur wenige, dem Hindernis 9 zugeordnete Tasterelemente 14 beaufschlagt. Dieses lokale Auslösen erfordert geringere Kräfte und kann sogleich eine Ortsinformation über den Standort des Hindernisses 9 liefern. Gleichzeitig wirken bei Geschwindigkeitsänderungen nur geringe Trägheitskräfte als Störgrößen. Das lokale Auslösen einzelner Tasterelemente 14 wird über chassisseitige Sensoren erfaßt

Auch kann das Tasterelement 14 zur Überprüfung eines Bereiches aktiv bewegbar sein, dies bei Anordnung des Tasterelements 14 in einer Vorstandslage gegenüber dem Bodenstaub-Aufsammelgerät 1, insbesondere gegenüber der Haube 6. In Figur 5 ist ein entsprechendes Ausführungsbeispiel dargestellt. Hier ist ein in üblicher Fahrtrichtung r vor dem Bodenstaub-Aufsammelgerät 1 angeordnetes Tasterelement 14 in Art eines Blindenstocks ausgelegt, welches Tasterelement 14 relativ zu einer Vertikalachse x des Bodenstaub-Aufsammelgeräts in einer Horizontalebene desselben bewegbar ist. Das Tasterelement 14 pendelt in der Horizontalebene um die Vertikalachse x und tastet hierbei die Umgebung vor dem Gerät ab. Die Auswertung des Tasterelements 14 erfolgt beispielsweise über eine Überwachung des zur Bewegung desselben erforderlichen Antriebsstroms des Tasterelement, Antriebsmotors. Bei Kontaktierung eines Hindernisses 9 und der damit einhergehenden Einschränkung der Schwenkbewegung des Tasterelements 14 erhöht sich der Antriebsstrom. Kombinativ hierzu kann das Tasterelement 14 auch stoßempfindlich ausgelegt sein. Des Weiteren besteht die Möglichkeit der Anordnung einer Sensorik, über welche der Schwenkwinkel des Tasterelements 14 erfaßt wird. Über den ermittelten Schwenkwinkel ist eine Ortsinformation über den Standort des Hindernisses 9 erreichbar.

Des Weiteren kann bei der Ausführungsform gemäß der Darstellung in Figur 5 eine Auswertung zur Hinderniserkennung auch über das Dehnungsmessprinzip erfolgen, da eine Kontaktierung eines Hindernisses 9 bei Schwenkverlagerung des Tasterelements 14 in der Horizontalebene zu einer Dehnung desselben auf der dem Hindernis 9 zugewandten Seite bewirkt. Auch kann das Tasterelement 14 aus mehreren leitfähigen Borsten bestehen. Diese können im Querschnitt sowohl rund als auch flächig ausgebildet sein. Diese leitfähigen Borsten werden bei Berührung des Hindernisses 9 in Kontakt gebracht, was über eine entsprechende Elektronik erfaßt wird.

Weiter alternativ oder auch kombinativ zu der Pendelbewegung des Tasterelements 14 in der Horizontalebene kann dieses auch in einer Vertikalebene bewegbar sein, womit neben der gewünschten Hinderniserkennung gleichzeitig auch eine Vorsorge gegen Unterfahren von Hindernissen erreicht ist. Mittels eines solchen sich in der Vertikalebene bewegenden Tasterelements 14 ist verhindert, dass sich das Gerät beispielsweise unter Sesseln, Schränke usw. festfährt.

Auch kann wie in Fig. 6 dargestellt, das aktiv bewegbare Tasterelement 14 in Form einer Bürste 16 ausgebildet sein, welche in einer Vorstandslage zu dem Gerät 1 angeordnet außerhalb des Gerätegrundrisses sich um eine parallel zur Vertikalachse x des Geräts 1 verlaufende Achse y dreht. Bevorzugt sind hierbei mehrere, über den Umfang des Geräts 1 verteilte Tasterelemente 14 bzw. Bürsten 16 vorgesehen, so weiter bevorzugt in Verfahrrichtung r im Bereich der Stirnseite des Geräts 1. Wie in Fig. 6 in einem Beispiel dargestellt, sind fünf winkelgleichmäßig verteilt angeordnete Bürsten 16 vorgesehen, welche zusammen sich etwa über 25 bis 30 % des Geräteumfangs erstrecken. Die Drehrichtung der Bürsten 16 ist uneinheitlich. So dreht in dem Ausführungsbeispiel eine stirnseitige Bürste 16 sowie die beiden in Draufsicht betrachtet rechts dieser Bürste 16 angeordneten Bürsten 16 entgegen der Uhrzeigerrichtung, wohin gegen sich die beiden links der stirnseitigen Bürste 16 angeordneten Bürsten 16 in Uhrzeigerrichtung bewegen.

Der Abstand der Bürsten 16 zueinander sowie der Abstand zur Gerätewandung bzw. zur Haube ist so gewählt, dass die Borsten 17 der Bürsten 16 ohne Kontaktierung benachbarter Bürsten 16 bzw. ohne Kontaktierung des Geräts 1 frei um die Bürstenachse y drehen. Auch sind die Bürsten 16 mit Abstand zum zu reinigenden Boden angeordnet. Um einem Unterfahren von Hindernissen entgegenzuwirken, können die Bürsten 16 nach vertikal oben über die Gerätedekke ragen.

Eine weitere alternative Ausgestaltung eines aktiven Tasterelements ist in Figur 7 dargestellt. Hierbei ist das Tasterelement 14 Teil eines an den Gerätegrundriss angepaßten, umlaufenden Tasterbands 18, welch letzteres als Bürstenband ausgebildet ist. Das umlaufende Tasterband 18 weist über den Umfang gleichmäßig verteilt angeordnete, radial abragende Tasterelemente 14 in Form von Borsten 17 auf.

Auch in den Ausführungsbeispielen gemäß den Darstellungen in den Fig. 6 und 7 kann eine Hinderniskontaktierung über eine Antriebsstrom-Überwachung erfaßt werden. Weiter ist auch die Anordnung leitfähiger Borsten 17 denkbar, welche bei Berührung des Hindernisses 9 in Kontakt gebracht werden.

Weitere - nicht dargestellte -mechanische Lösungen zur Hinderniserkennung weisen ein Reibelement auf, welches bei Kontakt zum Hindernis verschoben wird. Die Reibkraft, die in der Regel geringer ist als die direkte stoßbedingt auftretende Kraft, verschiebt dieses Reibelement, wobei eine Rückstellkraft das Reibelement in die Ausgangslage zurückbewegt. Diese Rückstellkraft kann durch eine beim Stoß gespannte Feder aufgebracht werden. Auch ist bei einem mechanisch schwingenden System die schwingende Länge durch den Stoß und die damit verbundene Deformation veränderbar, womit das System verstimmt wird.

Neben den mechanischen Lösungen werden auch elektrische bzw. elektronische Lösungen zur Hinderniserkennung vorgeschlagen. So ist wie in Fig. 8 schematisch dargestellt ein deformierbares Tasterelement 14 vorgesehen, welches über den gesamten Umfang angeordnet ist und wobei eine Deformierung über eine Änderung des elektrischen Widerstands erfaßbar ist. Hierbei besteht das Tasterelement 14 aus einem elektrisch leitfähigen, komprimierten Schaumstoff, der bei Hinderniskontakt bedingt durch die Deformation den elektrischen Widerstand ändert. Auch kann bei einer derartigen elastischen Verformung eines Tasterelements 14 die Längenänderung in eine elektrische Kenngröße wie Widerstand oder Induktivität eingesetzt werden. Ein zentraler Stoß wird in eine radiale elastische Längenänderung umgesetzt, wobei sich die Größe des elektrischen Widerstands des gelängten Bauteils verändert. Diese Widerstandsänderung wird erkannt,

Weiter alternativ kann auch durch Zug auf ein Seil beispielsweise ein Kern aus einer Spule gezogen werden, wodurch sich die Induktivität ändert

Auch können über den Umfang des Geräts 1 zwei zueinander beabstandete dünne Drähte oder Folien vorgesehen sein, zwischen welchen sich ein Dielektrikum befindet. Bei einem Hinderniskontakt wird der Abstand zwischen den Drähten bzw. Folien und somit die Kapazität verringert, welche Kapazitätverringerung zur Hinderniserkennung erfassbar ist,

Auch kann ein durch Hindernisbeaufschlagung gegen eine Leiterbahn drükkendes Stoßelement vorgesehen sein. Dieses kann in Kombination mit einem aktiven Tasterelement vorliegen.

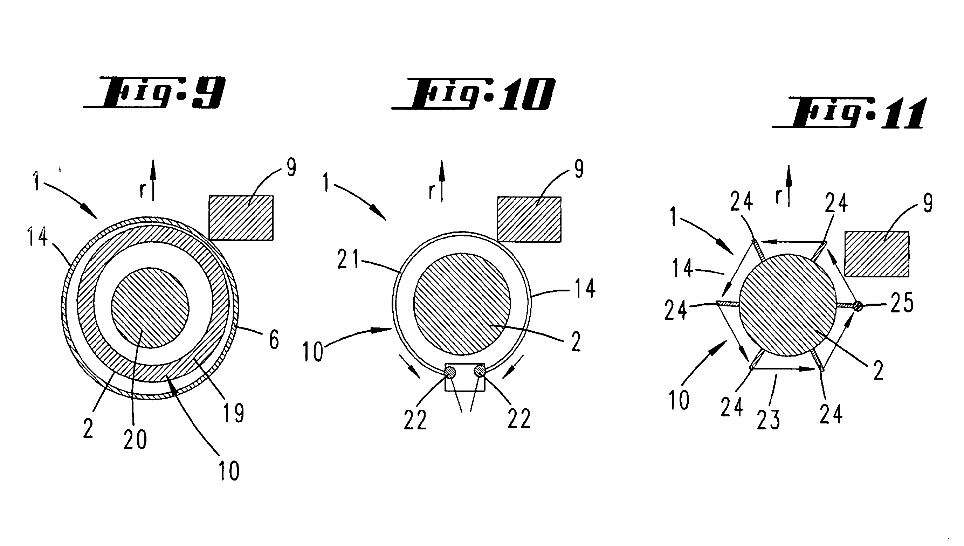

Eine weitere elektrische Lösung zur Hinderniserkennung zeigt die Darstellung in Fig. 9, wobei das gewählte Tasterelement 14 Teil der Haube 6 bzw. die Haube 6 selbst ist und wobei weiter das Tasterelement 14 sich über den gesamten Umfang der Abdeckung erstreckt. Die Hinderniserkennung 10 ist als Magnetschalter ausgebildet, wobei zwei Magnete vorgesehen sind, so ein beispielsweise als Ringmagnet gebildeter, chassisseitiger Lagermagnet 19 und ein an der Haube 6 bzw. dem durch diese gebildeten Tasterelement 14 befestigter beweglicher Magnet 20. In der unbelasteten Stellung befindet sich das Magnetsystem in einer Ruhelage, so bevorzugt in konzentrischer Zuordnung der beiden Magnete 19 und 20. Stößt das Tasterelement 14 bzw. die Haube 6 gegen ein Hindernis 9, so wird das System aus dieser Ruhelage bewegt, wobei das Magnetfeld eine Änderung erfährt. Diese Änderung ist detektierbar. Das Rückstellen in die Neutralposition erfolgt selbsttätig durch Ausrichten im Magnetfeld, gegebenenfalls unterstützt durch Federn, welche jedoch so ausgelegt sind, dass eine sensible Hinderniserkennung gewährleistet bleibt

Eine weitere alternative Ausgestaltung zeigt die schematische Darstellung in Fig. 10. Hierbei ist das Tasterelement 14 als ein in der Vorstandslage angeordneter, sich nahezu über den gesamten Umfang des Geräts 1 erstreckender luft gefüllter Schlauch 21 ausgebildet, Dieser Schlauch 21 ist bei Kontaktierung eines Hindernisses 9 durch die einwirkende Kraft deformierbar. Die durch diese Berührung hervorgerufene Luftdruckänderung ist durch einen Drucksensor 22 erfassbar. Bevorzugt sind, wie dargestellt, an beiden Enden des Schlauchs 21 Drucksensoren 22 vorgesehen, zufolge dessen eine Ortsauflösung durch einen Laufzeitvergleich vorgenommen werden kann.

Auch kann das Tasterelement 14, wie in Fig. 11 schematisch dargestellt, als Lichtschranke 23 ausgebildet sein, wobei diese Lichtschranke 23 nach Art eines Linienzugs durch Umlenkspiegel 24 über den gesamten Umfang des Geräts 1 verlängert ist. So sind in dem dargestellten Ausführungsbeispiel eine Sender- / Empfangereinheit 25 und fünf über den Umfang verteilte Umlenkspiegel 24 vorgesehen, wobei zwei benachbarte, radial zum Gerät 1 ausgerichtete Umlenkspiegel 24 einen Winkel von 60° einschließen.

Die Unterbrechung des Lichtstrahls, insbesondere eines Infrarot-Lichtstrahls durch ein Hindernis 9 wird erkannt Die Umlenkspiegel 24 und die Sender- / Empfangereinheit 25 sind mit empfindlichen taktilen Sensoren versehen, so dass auch ein Anstoßen dieser Elemente mit einem Hindernis 9 erkannt wird.

Eine weitere, jedoch nicht dargestellte alternative Ausgestaltung sieht ein Tasterelement 14 vor, welches in einer Vorstandslage zu dem Gerät 1 angeordnet ist und aus beabstandeten, einander zugewandten Reflektoren besteht. Diese Reflektoren erstrecken sich bevorzugt über den gesamten Umfang des Gerätegrundrisses. Zwischen diesen beiden parallelen Reflektorwänden wird eingesendetes Licht vollständig reflektiert. Durch Deformation bei einem Anstoßen gegen ein Hindernis 9 werden die Reflektionseigenschaften verändert. Alternativ kann bei einem Stoß auch ein Lichtleiter so deformiert werden, dass die Leitung unterbrochen ist.

Auch besteht die Möglichkeit der Anordnung einer Mehrzahl von kapazitiv und/ oder induktiv arbeitenden Abstandssensoren, welche über den Umfang des Gerätegrundrisses verteilt angeordnet sind. Solche Abstandssensoren reagieren bereits auf das Annähern an ein Hindernis 9, zufolge dessen Hindernisse ohne Stoß erkannt werden.

Die vorbeschriebenen Lösungsmöglichkeiten zur Hinderniserkennung sind untereinander kombinierbar.

Das Erkennen eines Hindernisses 9 durch eine der erfindungsgemäßen Hinderniserkennungen 10 führt zu einem strategischen Verhalten des autonom arbeitenden Bodenstaub-Aufsammelgerätes 1, so beispielsweise zu einem Rückwärtsfahren und anschließendem Umfahren des Hindernisses 9.

## Patentansprüche

1. Selbsttätig verfahrbares Bodenstaub-Aufsammelgerät (1) mit einem elektromotorischen Antrieb, einem Staubsammelbehälter und einer Abdeckung, wobei das Bodenstaub-Aufsammelgerät mit einer Hinderniserkennung (10) versehen ist, wobei eine Mehrzahl von in einer Vorstandslage angeordneten Tastenelementen vorgesehen sind, **dadurch gekennzeichnet, dass** ein Stoßring (13) durch federnd gelagerte Taster (14) mit kleiner Masse gebildet ist, die gegenüber einer Umfangskontur des Bodenstaub-Aufsammelgerätes in einer Vorstandslage sind.

2. Bodenstaub-Aufsammelgerät nach Anspruche 1, **dadurch gekennzeichnet, dass** die Tasterelemente (14) einen mehr als 25 % des Umfangs entsprechenden Bereich abdecken.

3. Bodenstaub-Aufsammelgerät nach einem der vorhergehenden Ansprüche, **dadurch gekennzeichnet, dass** ein Tasterelement (14) als Starrteil ausgebildet ist, das an seinem dem Grundriss des Bodenstaub-Aufsammelgeräts (1) zugeordneten Fuß (15) federnd gelagert ist.

## Claims

1. AutomatiCally displaceable floor dust collecting device (1) with an electromotive drive, a dust collecting container and a cover, the floor dust collecting device being provided with an obstacle detection feature (10), a Plurality of feeler elements disposed in a protruding arrangement being provided, **characterized in that** a bumper ring (13) is formed by resiliently mounted feelers (14) of low mass, which are in a protruding position with respect to a circumferential contour of the floor dust collecting device.

2. Floor dust collecting device according to Claim 1, **characterized in that** the feeler elements (14) cover a region corresponding to more than 25% of the circumference.

3. Floor dust collecting device according to either of the preceding claims, **characterized in that** a feeler element (14) is formed as a rigid part, which is resiliently mounted at the foot (15) thereof that is associated with the outline of the floor dust collecting device (1).

## Revendications

1. Aspirateur-traineau (1) à déplacement automatique avec une commande électromotrice, un collecteur de poussière et une enceinte, dans lequel l'aspirateur-traineau est pourvu d'une reconnaissance d'obstacles (10) dans lequel il est prévu une pluralité de palpeurs dépassant en avant, **caractérisé en ce qu'**un anneau d'impact (13) est formé par des palpeurs (14) montés de manière élastique et de faible masse qui se situent en regard d'un contour périphérique de l'aspirateur-traineau en position saillante.

2. Aspirateur-traineau selon la revendication 1, **caractérisé en ce que** les palpeurs (14) recouvrent plus de 25 % de la zone correspondant à la périphérie.

3. Aspirateur-traineau selon l'une quelconque des revendications précédentes, **caractérisé en ce qu'**un palpeur est conformé en partie rigide qui est montée de manière élastique sur son pied (15) affecté à la base de l'aspirateur-traineau (1).
